Europäisches Patentamt

European Patent Office

Office européen des brevets

(19)

(11) Numéro de publication : **0 131 487**
**B1**

(12) **FASCICULE DE BREVET EUROPÉEN**

(45) Date de publication du fascicule du brevet :
06.05.87

(51) Int. Cl.⁴ : **B 23 K 26/08**

(21) Numéro de dépôt : **84401163.5**

(22) Date de dépôt : **06.06.84**

(54) **Procédé et installation de soudage par point à faisceau laser.**

(30) Priorité : 27.06.83 FR 8310602

(43) Date de publication de la demande :
16.01.85 Bulletin 85/03

(45) Mention de la délivrance du brevet :
06.05.87 Bulletin 87/19

(84) Etats contractants désignés :
DE GB IT SE

(56) Documents cités :
FR-A- 2 310 846
FR-A- 2 375 964
JP-A-52 028 095
JP-A-57 044 486
JP-A-57 181 789
US-A- 4 088 865
US-A- 4 349 719
PATENTS ABSTRACTS OF JAPAN, vol. 7, no. 163 (M-229)[1308], 16 juillet 1983; & JP - A - 58 68 492 (TOKYO SHIBAURA DENKI K.K.) 23-04-1983
IDEM

(73) Titulaire : SCIAKY S.A. Société dite:
119 quai Jules Guesde
F-94400 Vitry sur Seine (Val de Marne) (FR)

(72) Inventeur : Sciaky, Mario
46, rue Fabert
Paris (FR)
Inventeur : Cazes, Roland
6, rue Marinville
Saint Maur (Val de Marne) (FR)
Inventeur : Sayegh, Georges
41, rue de Gergovie
Paris (FR)

(74) Mandataire : Cabinet BERT, DE KERAVENANT & HERRBURGER
115, Boulevard Haussmann
F-75008 Paris (FR)

## Description

L'invention concerne un procédé et une installation de soudage par point à faisceau laser.

Un faisceau laser focalisé, de puissance convenable, fournit une puissance spécifique élevée que l'on met à profit dans le travail des métaux en général et dans le soudage en particulier où elle permet d'obtenir des pénétrations importantes.

Un intérêt important des faisceaux laser réside dans leur faculté de se propager dans l'air sur des distances importantes sans déperditions notables et ainsi de pouvoir alimenter en temps partagé plusieurs postes de travail ou de soudage dispersés dans un atelier.

L'emploi d'un faisceau laser permet ainsi de résoudre le problème de la distribution de l'énergie depuis une source unique, produisant un faisceau laser parallèle, jusqu'aux différents dispositifs de focalisation qui sont disposés au droit de chaque soudure à réaliser et qui sont nécessaires pour obtenir un faisceau laser focalisé de puissance suffisante pour aboutir à l'effet de pénétration indispensable pour souder deux tôles superposées.

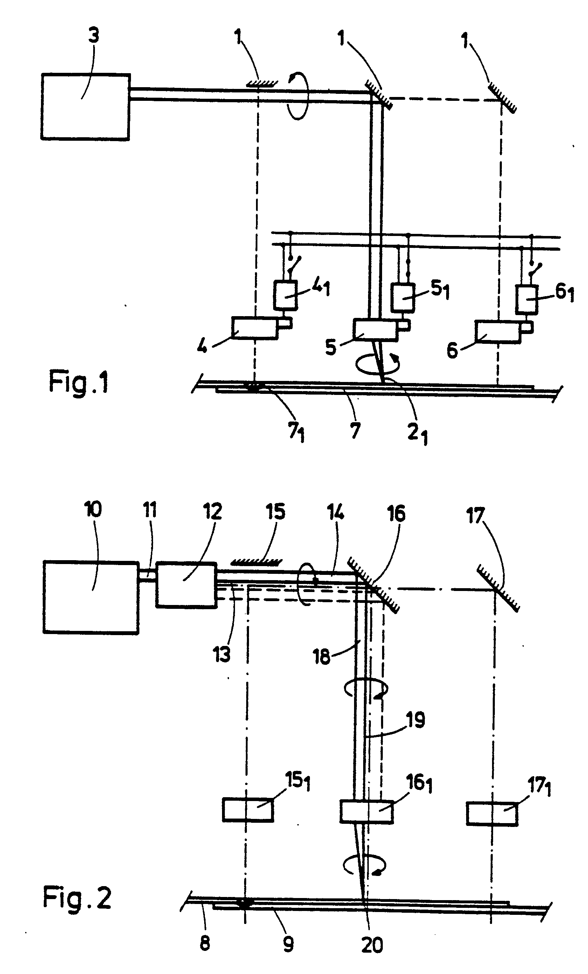

On peut ainsi envisager (voir figure 1), un ensemble de miroirs escamotables alignés 1 qui réfléchissent successivement le faisceau laser 2 issu du générateur 3 vers chacun des dispositifs de focalisation 4, 5, 6 en évitant ainsi les déplacements mécaniques importants et compliqués.

Dans le brevet japonais N° 5 228 095 il est par exemple décrit une installation qui met en œuvre plusieurs miroirs semi-transparents qui divisent un faisceau laser initial en plusieurs faisceaux de puissance moindre.

Par ailleurs, on sait que pour obtenir une fusion de section suffisante $7_1$ sur les pièces à souder 7 (voir figure 1), il est nécessaire d'appliquer au point de focalisation 21, situé sur la surface supérieure des pièces, un déplacement de préférence circulaire. En effet, un point de fusion obtenu sans un tel déplacement (voir brevet japonais N° 57 181 789) a un diamètre insuffisant et la multiplication de telles soudures fines n'est ni techniquement ni économiquement intéressant.

Ceci implique d'équiper chaque tête de soudage d'un système motorisé $4_1$, $5_1$, $6_1$ commandant la rotation du point de focalisation 21, ou plus généralement son déplacement, par action sur l'élément même, lentille ou miroir concave, prévu dans les dispositifs 4, 5, 6.

Cette nécessité se traduit par la mise en œuvre d'autant de systèmes de rotation ou de déplacement et de leurs contrôles qu'il y a de soudures à réaliser, ces systèmes devant en outre fonctionner en relation avec la commande du faisceau proprement dite.

On obtient ainsi un ensemble d'une certaine complexité de conception et de réalisation, du fait même de l'encombrement de chacun de ces dispositifs.

Le brevet japonais N° 5 744 486 décrit un mode de réalisation d'une tête de soudage à faisceau laser qui est destinée à entraîner le faisceau en rotation pour réaliser, non pas un point de soudure, mais une ligne de soudure circulaire.

Dans le brevet américain N° 4 088 865, il est également décrit une installation permettant de maintenir en alignement le faisceau laser de soudage et la ligne circulaire le long de laquelle doit s'effectuer le soudage de deux tubes.

La présente invention a notamment pour but de remédier à ces inconvénients et concerne à cet effet un procédé de soudage par point à faisceau laser, comportant un générateur de faisceaux laser et au moins un moyen recevant le faisceau laser et le focalisant sur les pièces à souder, procédé caractérisé en ce que l'on entraîne en déplacement le faisceau laser issu du générateur et on amène ce faisceau laser mobile sur un moyen de focalisation statique réalisé de manière telle que, compte tenu du déplacement du faisceau, le point de focalisation se déplace sur les pièces à souder.

Suivant une autre caractéristique de l'invention, on entraîne en déplacement le faisceau laser issu du générateur parallèlement à son axe.

Suivant une autre caractéristique de l'invention, on entraîne le faisceau laser en rotation.

Suivant une autre caractéristique de l'invention, on entraîne le faisceau laser en déplacement dans un plan.

L'invention concerne également l'installation pour la mise en œuvre de ce procédé.

L'invention est représentée à titre d'exemples non limitatifs sur les dessins ci-joints, dans lesquels :

la figure 1 est une vue schématique de l'installation de soudage de type connu,

la figure 2 est une vue latérale schématique d'une installation conforme à l'invention,

la figure 3 est une vue en perspective schématique montrant un mode de réalisation du dispositif assurant le déplacement du faisceau laser suivant un mouvement de rotation circulaire.

la figure 4 est une vue en perspective d'une installation à miroir à facettes,

la figure 5 est une vue en élévation du miroir de la figure 4,

la figure 6 est une vue en coupe suivant X-X de la figure 5,

la figure 7 est une vue latérale représentant le moyen de focalisation réalisé sous la forme d'une lentille à facettes,

la figure 8 est une vue en coupe d'une soudure par point réalisée par la mise en œuvre de l'invention,

la figure 9 est une vue de dessus de la figure 8,

la figure 10 est une vue en élévation d'un autre mode de réalisation d'une soudure par point,

la figure 11 est une vue en perspective d'un autre mode de réalisation du miroir de focalisation,

la figure 12 est une vue en perspective d'un autre mode de réalisation de la lentille de focalisation,

la figure 13 représente en perspective un miroir de focalisation réalisé sous la forme d'une bande à facettes.

La présente invention a en conséquence pour but la réalisation d'une installation de soudage par point à faisceau laser qui permet d'obtenir des points de soudure de surface et donc de solidité acceptable, en mettant en œuvre une tête statique de focalisation du faisceau.

Cette tête de focalisation statique, donc sans élément mobile en fonctionnement, présente en outre l'avantage d'être de construction et de montage simples ainsi que d'un faible encombrement.

Ce résultat est obtenu par le déplacement du point de focalisation du faisceau sur la pièce, ce déplacement du point de focalisation résultant lui-même du déplacement du faisceau laser venant frapper le moyen de focalisation statique. Ce moyen de focalisation pourra être constitué soit par des lentilles, soit par des miroirs adaptés en forme et dimensions à la dimension et au mouvement du faisceau laser incident et à la position du point de focalisation désiré. En outre, la nature du matériau entrant dans la construction de ces moyens de focalisation sera déterminée en fonction de la puissance du faisceau laser mis en œuvre.

La figure 2 représente une installation de soudage par faisceau laser, destinée à réaliser successivement plusieurs points de soudure circulaire entre deux tôles 8 et 9.

Dans ce cas, le générateur de faisceaux laser 10 produit un faisceau 11 qui est amené dans un dispositif 12 entraînant ce faisceau laser en rotation parallèlement autour d'un axe 13.

En alignement sur cet axe 13, sont disposés plusieurs miroirs plans 15, 16 et 17 qui peuvent soit être écartés de l'axe 13 soit être placés suivant cet axe afin de réfléchir le faisceau tournant 14 vers le dispositif de focalisation correspondant $15_1$, $16_1$, $17_1$.

Ces dispositifs de focalisation qui reçoivent le faisceau laser 18 réfléchi par les miroirs 15, 16 ou 17 et qui tournent autour de l'axe 19, assurent la focalisation de ce faisceau 18 en un point 20 situé sur la face supérieure des pièces superposées 8, 9, ce point 20 effectuant sur ces pièces une trajectoire circulaire fonction de la trajectoire circulaire du faisceau incident 18. Le faisceau laser focalisé sur les pièces a alors pour effet d'assurer, progressivement au cours de sa rotation, la fusion des pièces dans leur zone de contact et, donc, leur soudage suivant un point dont le diamètre correspond sensiblement à celui du cercle délimité par la trajectoire circulaire du point de focalisation 20.

On comprend que la réalisation de ce moyen de focalisation uniquement à l'aide d'éléments statiques, permettra de simplifier sa construction et son montage et, notamment, de réduire son encombrement ce qui est hautement souhaitable afin de permettre, d'une part le rapprochement des points de soudure et donc le renforcement de l'assemblage ainsi que de libérer le maximum de place pour les outillages de positionnement et de serrage des deux pièces à assembler.

Dans l'exemple de la figure 2, le dispositif 12 assure la rotation du faisceau laser parallèlement autour de l'axe 13. Dans un autre mode de réalisation, on pourra cependant envisager d'entraîner ce faisceau laser issu du dispositif 12 en pivotement autour de l'axe 13 afin qu'il décrive une trajectoire circulaire ou toute autre trajectoire adaptée au résultat à obtenir.

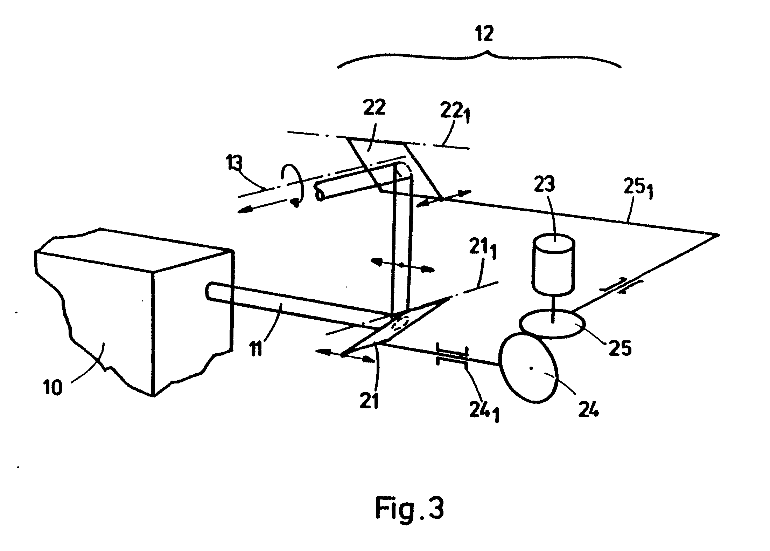

Suivant la figure 3, on a représenté un exemple de réalisation du dispositif 12 qui assure le déplacement du faisceau laser en translation circulaire.

Dans ce cas, le faisceau 11 issu du générateur 10 est réfléchi successivement par deux miroirs plans 21 et 22 qui sont entraînés en pivotement respectivement autour d'axes perpendiculaires $21_1$ et $22_1$. Ce pivotement est obtenu à partir d'un moteur électrique 23 qui entraîne deux engrenages 24 et 25 reliés chacun par une transmission mécanique $24_1$ et $25_1$ aux miroirs 21 et 22.

Ce pivotement combiné des deux miroirs 21 et 22 dans deux directions perpendiculaires permettra alors d'obtenir le déplacement par translation du faisceau émergeant 14 autour de l'axe 13, cet axe 13 constituant un axe de révolution pour le faisceau 14 dans la mesure où l'amplitude et la vitesse des mouvements de pivotement des miroirs 21 et 22 sont identiques et dans la mesure où ces mouvements oscillants de ces miroirs sont déphasés de 90°. Tout autre déplacement du faisceau laser pourra cependant être obtenu en modifiant l'amplitude, la vitesse et la phase de ces deux mouvements.

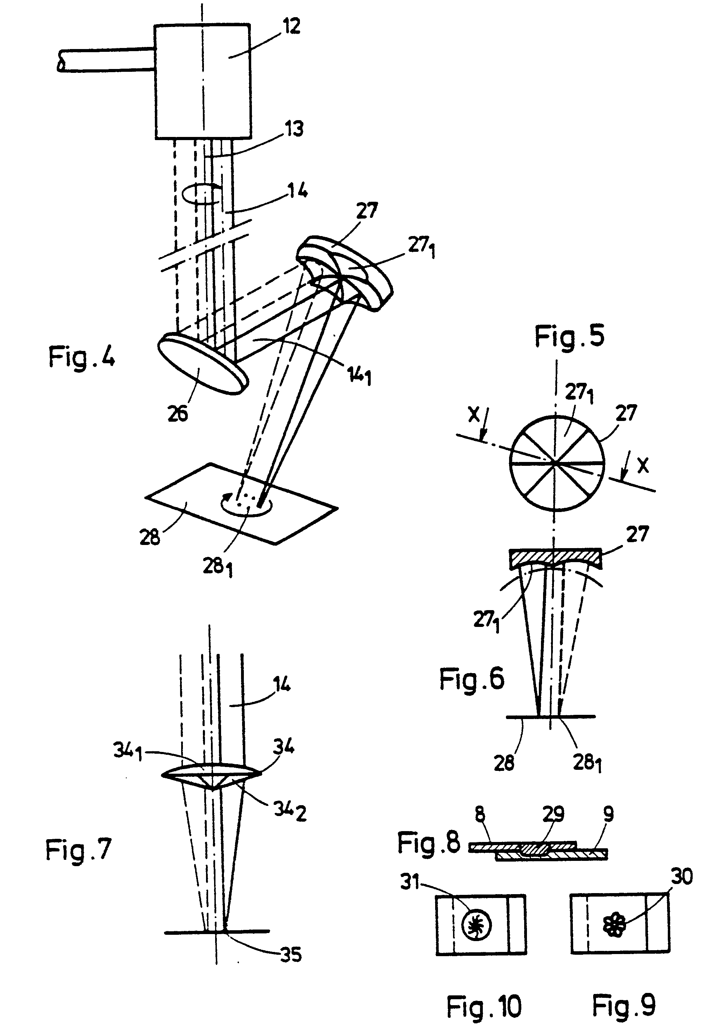

Dans l'exemple de réalisation de la figure 4, on a représenté un exemple de réalisation à miroirs des dispositifs de focalisation $15_1$, $16_1$ et $17_1$. Dans ce cas, le faisceau laser tournant 14 issu du dispositif 12 est amené sur un premier miroir du plan 26 qui le réfléchit sur un second miroir 27 constitué de plusieurs secteurs adjacents $27_1$ délimitant chacun un miroir concave propre à réfléchir et à focaliser chacun le faisceau laser en des points voisins déterminant ensemble une trajectoire circulaire, ces points étant situés sur un plan de focalisation 28 constitué par la face supérieure des pièces à souder. Ainsi, au cours d'une rotation du faisceau 14 autour de l'axe 13, le faisceau 14 réfléchi par le miroir plan 26 est amené successivement sur les secteurs concaves $27_1$ qui focalisent successivement le faisceau sur le plan de focalisation 28 en des points voisins les uns des autres de façon que l'ensemble des fusions ponctuelles réalisées à hauteur des points de focalisation $28_1$ forment ensemble un point de soudure 29 des deux pièces (voir figure 8), ce point de soudure étant d'une surface telle qu'il assure un assemblage solide des deux pièces.

Dans l'exemple de réalisation des figures 4, 5 et 6 la mise en œuvre du miroir 27 permettra donc d'obtenir des fusions ponctuelles des pièces à assembler, est représenté en 30 sur la figure 9. Cependant, dans la mesure où le miroir 27, qui présente des secteurs adjacents concaves $27_1$, est remplacé par un miroir dont la face réfléchissante délimite une surface de révolution, ou sensiblement de révolution selon l'angle d'incidence du faisceau, dans ce cas on obtiendra un déplacement continu du point de focalisation du faisceau sur les pièces de façon à obtenir une ligne de fusion continue et, par exemple, circulaire sur ces deux pièces, cette fusion assurant également par conduction thermique cumulée la fusion et le soudage des deux pièces suivant une surface 31 correspondant sensiblement à la surface délimitée par la trajectoire du point de focalisation.

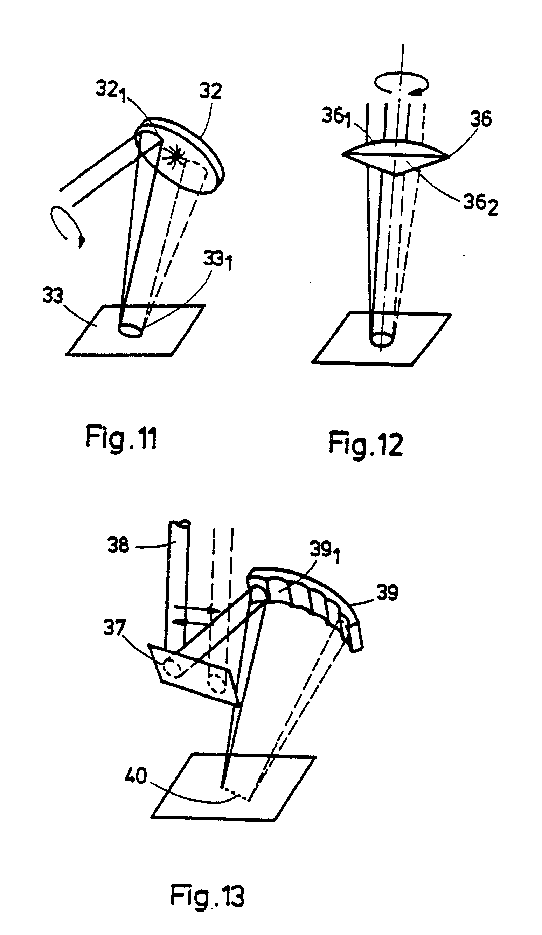

Un exemple d'un tel miroir est représenté en 32 sur la figure 11, la surface réfléchissante $32_1$ de ce miroir étant constituée par une surface concave torique assurant la focalisation du faisceau laser suivant une trajectoire circulaire $33_1$ située sur le plan de focalisation 33.

Le moyen de focalisation statique mis en œuvre suivant l'invention pourra également être réalisé à l'aide d'une lentille.

Ainsi, suivant l'exemple de la figure 7, le moyen de focalisation est constitué par une lentille 34 dont la face supérieure $34_1$, qui reçoit le faisceau laser incident mobile 14, est convexe, alors que la face inférieure $34_2$, d'où émerge le faisceau laser focalisé, est constituée par des facettes adjacentes délimitant ensemble une pyramide, la surface plane convexe ou concave de ces facettes étant adaptée à focaliser successivement le faisceau laser en des points adjacents délimitant ensemble une trajectoire circulaire.

Bien entendu, cette lentille de focalisation pourra être conçue de façon à réaliser une ligne de fusion continue sur le plan de focalisation et, dans ce cas, cette lentille sera par exemple constituée (voir figure 12) par une lentille 36 dont la face supérieure $36_1$ est convexe et dont la face inférieure $36_2$ délimite une surface de révolution, par exemple une surface conique à génératrice droite ou courbe (concave ou convexe).

Si l'on désire obtenir à l'aide du procédé conforme à l'invention non pas une soudure par point mais, au contraire, une ligne de soudure, dans ce cas, le faisceau laser issu du générateur sera déplacé par balayage suivant un plan afin de venir frapper un premier miroir plan 37 (voir figure 13). Ce balayage sera obtenu soit par translation du faisceau 38, soit au contraire par pivotement. Le faisceau réfléchi par le miroir 37 est alors ramené sur un miroir 39 dont la surface réfléchissante présente des facettes adjacentes par exemple de forme concave, adaptées à réfléchir le faisceau laser en des points de focalisation voisins ou adjacents 40 sur le plan de focalisation.

## Revendications

1. Procédé de soudage par point à faisceau laser, comportant un générateur de faisceaux laser (10) et au moins un moyen recevant le faisceau laser et le focalisant sur les pièces à souder, procédé caractérisé en ce que l'on entraîne en déplacement le faisceau laser (11) issu du générateur (10) et on amène ce faisceau laser mobile (14, 18) sur un moyen de focalisation statique ($15_1$, $16_1$, $17_1$) réalisé de manière telle que, compte tenu du déplacement du faisceau, le point de focalisation de ce faisceau se déplace sur les pièces à souder immobiles pour y former un point de soudure de surface notable.

2. Procédé conforme à la revendication 1, caractérisé en ce que l'on entraîne en déplacement le faisceau laser (11) issu du générateur (10) parallèlement à son axe (13).

3. Procédé conforme à l'une quelconque des revendications précédentes, caractérisé en ce que l'on entraîne le faisceau laser en rotation.

4. Procédé conforme à l'une quelconque des revendications précédentes, caractérisé en ce que l'on entraîne le faisceau laser en déplacement dans un plan.

5. L'installation pour la mise en œuvre du procédé conforme à l'une quelconque des revendications précédentes, comportant des moyens (12) pour déplacer le faisceau laser issu d'un générateur de faisceau et pour amener ce faisceau laser mobile sur un moyen de focalisation fixe afin de produire un point de soudure de surface notable.

6. Installation conforme à la revendication 5, caractérisée en ce qu'elle comporte un moyen de focalisation comprenant au moins une lentille (34, 36).

7. Installation conforme à la revendication 5, caractérisée en ce qu'elle comporte un moyen de focalisation comprenant au moins un miroir.

8. Installation conforme aux revendications 6 et 7, caractérisée en ce que l'une des faces de la lentille ou la face réfléchissante du miroir délimite une surface de révolution.

9. Installation conforme à l'une quelconque des revendications précédentes, caractérisée en ce que l'une des faces de la lentille ou la face réfléchissante du miroir présente des secteurs adjacents propres à focaliser le faisceau en des points adjacents sur les pièces.

## Claims

1. A spot welding process using a laser beam, comprising a laser beam generator (10) and at least one means for receiving the laser beam and focussing it onto the piece to be welded, which process is characterised in that the laser beam (11) produced by the generator (10) is displaced, and this moving laser beam (14, 18) is guided into a static focussing means ($15_1$, $16_1$, $17_1$) such that, taking into account the displacement of the beam, the focussing point of said beam moves on the stationary pieces to be welded to form a welding point having an appreciable surface.

2. A process as in claim 1, characterised in that the laser beam (11) produced by the generator (10) is displaced parallel to its axis (13).

3. A process as in either of the above claims, characterised in that the laser beam is rotated.

4. A process as in any of the above claims, characterised in that the laser beam is displaced in one plane.

5. An installation for implementing the process in any of the above claims, comprising a means (12) for displacing the laser beam produced by a beam generator and for guiding said moving laser beam onto a fixed focussing means to form a welding point having an appreciable surface.

6. An installation as in claim 5, characterised in that it comprises a focussing means comprising at least one lens (34, 36).

7. An installation as in claim 5, characterised in that it comprises a focussing means comprising at least one mirror.

8. An installation as in claims 6 and 7, characterised in that one of the faces of the lens or the reflecting face of the mirror defines a surface of revolution.

9. An installation as in any of the above claims, characterised in that one of the faces of the lens or the reflecting face of the mirror has adjacent sectors capable of focussing the beam on adjacent points on the pieces.

**Patentansprüche**

1. Verfahren zum Laserstrahlpunktschweißen, aufweisend eine Laserstrahlenquelle (10) und zumindest ein den Laserstrahl empfangendes und auf den zu verschweißenden Werkstücken fokussierendes Mittel, dadurch gekennzeichnet, daß man eine Ablenkung des von der Strahlenquelle (10) erzeugten Laserstrahls (11) herbeiführt und daß man den beweglichen Laserstrahl (14, 18) durch ein stationäres Mittel zum Fokussieren ($15_1$, $16_1$, $17_1$) leitet, das so ausgeführt ist, daß entsprechend der Ablenkung des Strahles sich der Brennpunkt des Strahles auf den unbeweglichen zu verschweißenden Werkstücken bewegt, um dort einen Schweißpunkt von bestimmter Fläche zu erzeugen.

2. Verfahren nach Anspruch 1, dadurch gekennzeichnet, daß man eine Ablenkung des von der Strahlenquelle (10) erzeugten Laserstrahles (11) parallel zu seiner Achse (13) herbeiführt.

3. Verfahren nach einem beliebigen der vorhergehenden Ansprüche, dadurch gekennzeichnet, daß man den Laserstrahl in Rotation versetzt.

4. Verfahren nach einem beliebigen der vorhergehenden Ansprüche, dadurch gekennzeichnet, daß man die Ablenkung des Laserstrahles in einer Ebene herbeiführt.

5. Vorrichtung zur Durchführung des Verfahrens nach einem beliebigen der vorhergehenden Ansprüche, gekennzeichnet durch Mittel (12) zum Ablenken des von einer Strahlenquelle erzeugten Laserstrahles und Leiten dieses Laserstrahles durch ein fest angeordnetes Mittel zum Fokussieren, um einen Schweißpunkt von bestimmter Fläche zu erzeugen.

6. Vorrichtung nach Anspruch 5, dadurch gekennzeichnet, daß die Vorrichtung ein wenigstens eine Linse (34, 36) enthaltendes Mittel zum Fokussieren aufweist.

7. Vorrichtung nach Anspruch 5, dadurch gekennzeichnet, daß die Vorrichtung ein wenigstens einen Spiegel enthaltendes Mittel zum Fokussieren aufweist.

8. Vorrichtung nach den Ansprüchen 6 und 7, dadurch gekennzeichnet, daß eine der Frontseiten der Linse oder die reflektierende Oberfläche des Spiegels eine rotationssymmetrische Fläche begrenzt.

9. Vorrichtung nach einem beliebigen der vorhergehenden Ansprüche, dadurch gekennzeichnet, daß eine der Frontseiten der Linse oder die Oberfläche des Spiegels nebeneinanderliegende Sektoren aufweist, die geeignet sind, den Strahl auf nebeneinanderliegende Punkte auf den Werkstücken zu fokussieren.

Fig.1

Fig.2

Fig. 3

0 131 487

0 131 487

Fig.4

Fig.5

Fig.6

Fig.7

Fig.8

Fig.10

Fig.9

3

Fig.11

Fig.12

Fig.13